# EUROPÄISCHE PATENTSCHRIFT

(11) **EP 1 271 727 B1**
(45) Veröffentlichungstag und Bekanntmachung des Hinweises auf die Patenterteilung: **11.01.2012**
(21) Anmeldenummer: 02001854.5
(22) Anmeldetag: 28.01.2002
(51) Int. Cl.: H02B 1/21

(54) **Elektrisches Installationsgerät**
Electrical installation apparatus
Appareil d'installation électrique

(30) Priorität: 22.06.2001 CH 11412001
(43) Veröffentlichungstag der Anmeldung: 02.01.2003
(73) Patentinhaber: WEBER AG, 6021 Emmenbrücke (CH)
(72) Erfinder: Mischon, Daniel, 6206 Neuenkirch (DE)
(74) Vertreter: Bremi, Tobias Hans

(56) Entgegenhaltungen:
- DE-U- 7 322 603

## Beschreibung

### TECHNISCHES GEBIET

Elektrisches Installationsgerät zur Montage auf einem Sammelschienensystem wahlweise mit Abgang in entgegengesetzten Abgangsrichtungen, welches Installationsgerät Stromschienenverbindungen sowie mit den Stromschienenverbindungen in jeweils einer Kontaktposition zusammenwirkende, die Sammelschienen hakenförmig umgreifende Klemmen aufweist, wobei das Installationsgerät auf Umschlag teilweise symmetrisch ausgebildet ist und wobei die Klemmen im Installationsgerät jeweils zwei einander entgegengesetzte Drehstellungen einnehmen können.

Bei dem elektrischen Installationsgerät kann es sich z.B. um einen ein- oder mehrpoligen NH-Sicherungslasttrennschalter oder eine NH-Sicherungslastschaltleiste mit NH-Sicherungskontakten, um einen Klemmenblock, um ein Sicherungselement aber auch nur um ein Unterteil oder einen Adapter für irgendein anderes elektrisches Installationsgerät handeln.

Abgangsseitig werden an die Geräte dieser Art zumeist Kabel angeschlossen, wobei die Abgangsrichtung mehrerer nebeneinander in Reihe auf bzw. an den Sammelschienen montierter Geräte nach Möglichkeit stets gleich, z.B. immer nach unten oder immer nach oben gewählt wird. Zuweilen besteht jedoch die Notwendigkeit, die Abgangsrichtung für ein einzelnes Installationsgerät zu wechseln. Durch Drehen des ganzen Geräts ist das in der Regel einfach möglich. Das einfache Drehen hat jedoch den Nachteil, dass die hakenförmigen Klemmen die Sammelschienen dann von der anderen Seite her umgreifen und das gedrehte Gerät deshalb um die Breite der Sammelschienen versetzt gegenüber den übrigen Geräten angeordnet ist und nicht länger mit diesen fluchtet. Abgesehen davon, dass dies optisch unschön aussieht, ergeben sich daraus oft Schwierigkeiten bei der Montage der für den Berührungsschutz erforderlichen Feldabdeckungen.

### STAND DER TECHNIK

Aus der EP 0 440 933 B1 ist ein Installationsgerät in Form eines Sammelschienendadapters mit Hakenklemmen bekannt, welcher sich auf Umschlag passend machen lässt. Der unerwünschte seitliche Versatz beim Drehen des Adapters wird hier durch ein vorgängiges Drehen der Hakenklemmen im Adaptergehäuse vermieden. Die Hakenklemmen sind hierzu im Adaptergehäuse in Hohlräumen gehalten, aus welchen sie senkrecht zu der durch die Sammelschienen definierten Ebene herausnehmbar und in umgekehrter Ausrichtung wieder einsetzbar sind. Damit die Hakenklemmen aus dem Adaptergehäuse herausgenommen und gedreht werden können, müssen vorgängig die auf dem Adapter montierten Geräteteile enfernt und nachfolgend wieder montiert werden. Je nach Ausbildung und aufgesetztem Gerätetyp kann dies mit einem erheblichen Aufwand verbunden sein. Auch müssen dabei ggf. Verschraubungen gelöst werden, die zur Sicherstellung eines sicheren und dauerhaften Kontaktes mit einem hohen Drehmoment angezogen sind.

Aus der EP 0 594 544 ist ein anderer auf Umschlag passend zu machender Sammelschienenadapter bekannt. Bei diesem Adapter behalten die Hakenklemmen ihre Montagerichtung in einem Grundkörper, der ebenfalls nicht gedreht wird. Gedreht werden lediglich Anschlussfahnen im Grundkörper, indem ihre Kontaktenden zur Kontaktierung der Sammelschienen alternativ von der einen oder der anderen Seite her seitlich in durchgehende Längsschlitze in den Grundkörper eingeschoben werden. Das seitliche Einschieben bedingt jedoch eine gerade Ausbildung der Kontaktenden, was wiederum zur Folge hat, dass ein direkter Kontakt der Kontaktenden mit den Sammelschienen nicht möglich ist. Es werden Zwischenstücke benötigt.

### DARSTELLUNG DER ERFINDUNG

Es ist Aufgabe der vorliegenden Erfindung, ein Installationsgerät der eingangs genannten Art anzugeben, welches auf einfache Art bei Bedarf auf Umschlag passend gemacht werden kann und die vorerwähnten Nachteile vermeidet. Erfindungsgemäss wird diese Aufgabe dadurch gelöst, dass die Klemmen im Installationsgerät selbst geführt drehbar sind. Hierdurch können die Klemmen gedreht werden, ohne dass wesentliche Teile des Installationsgeräts vorgängig demontiert werden müssen. Auch sind auch keine Manipulationen an den Stromschienenverbindungen nötig, die insofern fest und mit direktem Kontakt zu den Sammelschienen in dem Installationsgerät eingebaut sein können.

Eine bevorzugte Ausführungsform der Erfindung zeichnet sich dadurch aus, dass die Klemmen ein wenigstens teilweise zylindrisch ausgebildetes Klemmengehäuse umfassen und dass in dem Installationsgerät zylindrische Führungen für die Klemmengehäuse vorgesehen sind.

Hierbei kann insbesondere vorgesehen sein, dass die Klemmen in ihrer Kontaktposition geführt drehbar sind, dass die Stromschienenverbindungen im Bereich dieser Kontaktposition jeweils eine in Längsrichtung der Sammelschienen seitlich abstehende Kontaktzunge aufweisen, dass die Klemmen mit diesen Kontaktzungen zusammenwirken und beim Drehen um diese Kontaktzungen herum schwenken.

Alternativ kann vorgesehen sein, dass die Klemmen aus ihrer Kontaktposition im Installationsgerät heraus in eine Drehposition verschiebbar und in der Drehposition jeweils geführt drehbar sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: ein als NH-Sicherungslasttrennschalter ausgeführtes elektrisches Installationsgerät mit einer ersten Ausführungsform der Erfindung in einer Seitenansicht und zwar unter a) mit Abgang nach unten und unter b) mit Abgang nach oben;
- Fig. 2: das Unterteil der Installationsgeräts von Fig. 1 in perspektivischer Ansicht mit Blick auf seine Unterseite;
- Fig. 3: die Unterseite desselben Installationsgeräts in Aufsicht einer Klemmenstellung für den Abgang nach oben; und
- Fig. 4: ein Unterteil eines anderen Installationsgeräts mit einer anderen Ausführungsform der Erfindung in perspektivischer Ansicht von oben.

### WEGE ZUR AUSFÜHRUNG DER ERFINDUNG

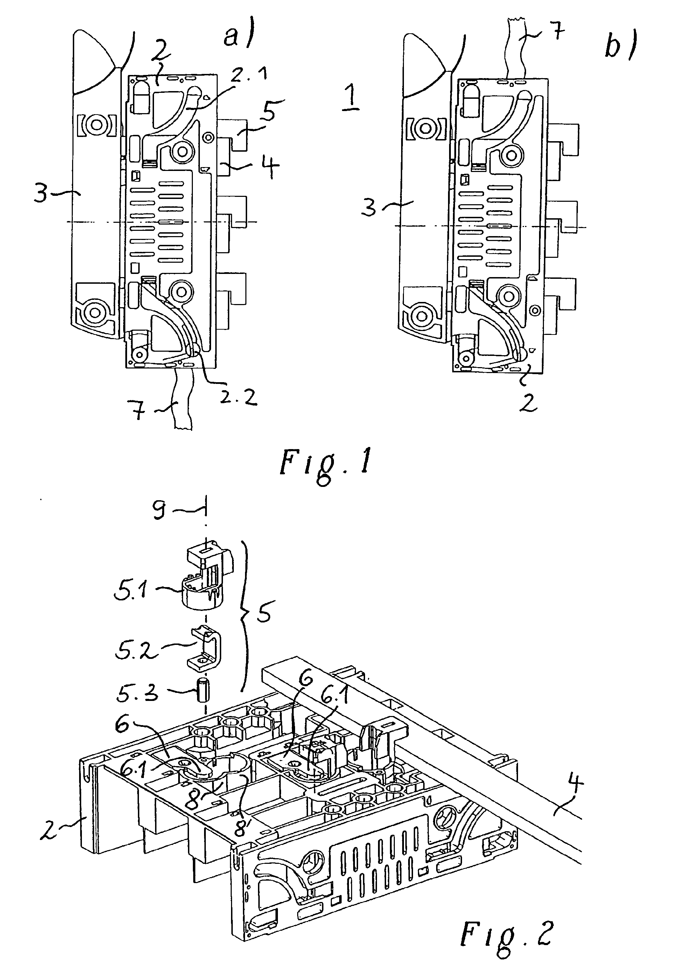

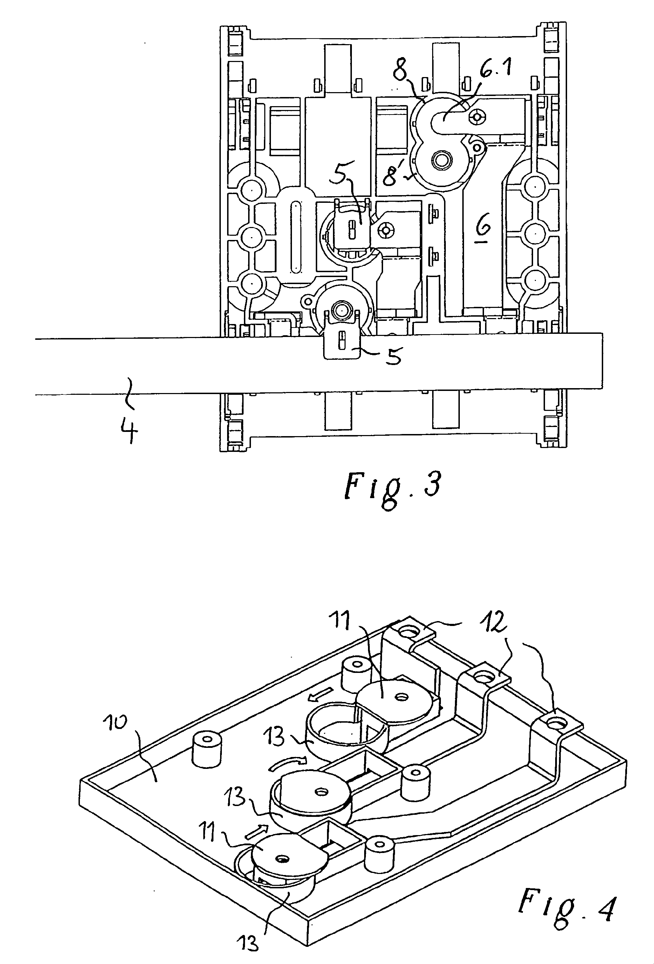

Das Installationsgerät 1 von Fig. 1 a) und b) ist ein NH-Sicherungslasttrennschalter mit einem Unterteil 2 und einem lösbar sowie schwenkbar am Unterteil 1 befestigten Schaltdeckel 3, in welchem nicht sichtbare, für die weitere Darstellung aber auch nicht wesentliche NH-Sicherungen untergebracht sind. Aufgesetzt ist das Installationsgerät 1 auf drei Sammelschienen 4 und mittels hakenförmigen Klemmen 5 mit diesen verschraubt. Die hakenförmigen Klemmen 5 umgreifen die Sammelschienen 4 jeweils von oben und stellen einen elektischen Kontakt zwischen den Sammelschienen 4 und in dem Unterteil zu den erwähnten NH-Sicherungen hinführenden Stromschienenverbindungen her. In Fig. 2 und 3 sind jeweils zwei von drei der Stromschienenverbindungen zu sehen und mit 6 bezeichnet. Die dritte Stromschienenverbindung ist in diesen Figuren durch die eine dargestellte Sammelschiene 4 jeweils verdeckt.

Mit 7 ist unter a) und b) in Fig. 1 jeweils eines von mehreren Kabeln bezeichnet, die den Abgang des NH-Sicherungslasttrennschalter bilden. In Fig. 1 a) ist der Abgang nach unten und in Fig. 1b) nach oben gerichtet. Zum Wechsel der Abgangsrichtung wird das Unterteil 2 gedreht. Damit sich hierbei die Position des Installationsgerätes 1 relativ zu den Sammelschienen 4 nicht verschiebt und auch die Öffnungsrichtung des Schaltdeckels 3 gleichbleibt, werden gleichzeitig die hakenförmigen Klemmen 5 im Unterteil 2 sowie der Schaltdeckel 3 auf dem Unterteil 2 gedreht. Bezüglich des Schaltdeckels 3 sind am Unterteil 2 hierzu symmetrische Lager 2.1 und 2.2 vorgesehen, in welche der Schaltdeckel bevorzugt nur eingeschnappt ist. Wie die Klemmen 5 im Unterteil 2 gedreht werden können, wird nachstehend erläutert.

Die Klemmen 5 umfassen gemäss der in Fig. 2 in Explosionsdarstellung herausgezeichneten einen Klemme 5 ein teilweise zylindrisch ausgebildetes Klemmgehäuse 5.1, ein etwa C-förmig ausgebildetetes Klemmelement 5.2 sowie eine Klemmschraube 5.3. Im Unterteil 2 sind zylindrische Führungen 8 für die Klemmgehäuse 5.1 vorgesehen, in welchen die Klemmgehäuse 5.1 und mit ihnen die ganzen Klemmen 5 jeweils um eine senkrecht zur Ebene der Sammelschienen 4 verlaufende Achse geführt drehbar sind. Eine dieser Achsen ist in Fig. 2 mit 9 bezeichnet. Die in Fig. 2 in Explosionsdarstellung gezeigte Klemme 5 ist in Fig. 3 weggelassen. In Fig. 2 sind die beiden übrigen Klemmen 5, d.h. die mittelere sowie die die eine Sammelschiene 4 umgreifende Klemme, aus Demonstrationsgründen in unterschiedlichen Drehstellungen gezeigt.

Die Stromschienenverbindungen 6 verlaufen im Unterteil 2 im wesentlichen quer zu den Sammelschienen 4. Im Bereich ihrer den Kontaktklemmen 5 zugewandeten Enden sind sie jedoch jeweils mit seitlich in Längsrichtung der Sammelschienen 4 abstehenden sowie in den Bereich der Führungen 8 vorstehenden Kontaktzungen 6.1 versehen. Mit diesen Kontaktzungen 6.1 wirken die Klemmen 5 zusammen und schwenken beim Drehen in ihren Führungen 8 um diese Kontaktzungen 6.1 herum. Die Klemmen 5 können demnach im Unterteil 2 direkt in ihrer Kontaktposition und ungehindert durch die Stromschienenverbindungen 6 gedreht werden und zwar einfach per Hand, da sie aus dem Installationsgerät ja etwas herausragen und derart zum Drehen einfach zugänglich sind.

Nach dem Drehen der Klemmen 5 muss der Schaltdeckel 3 (sowie allenfalls noch innere Berührungsschütze) auch noch gewendet werden. Das stellt jedoch deshalb keine zusätzliche Erschwernis dar, weil der Schaltdeckel 3 (und allenfalls noch innere Berührungsschütze) zur Montage des Geräts auf das Sammelschienensystem in der Regel sowieso vorrübergehend vom Unterteil abgenommen werden muss.

Wie in Fig. 2 und Fig. 3 zu erkennen ist, sind neben den beiden äusseren Führungen 8 jeweils noch Führungen 8' ausgebildet, die sich mit den Führungen 8 etwas überschneiden. In diese weiteren Führungen 8' können die Klemmen 5 dann drehbar eingesetzt werden, wenn das Installationsgerät 1 auf einem Sammelschienensystem mit einem geringeren gegenseitigen Abstand der Sammelschienen montiert werden soll. Die Führungen 8 könnten z.B. auf einen Sammelschienenabstand von 60 mm und die Führungen 8' auf einen solchen von 40 mm eingestellt sein.

In Fig. 4 ist noch eine weitere Möglichkeit dargestellt, wie Kontaktklemmen 11 in einem mit Stromschienenverbindungen 12 versehenen Unterteil 10 geführt drebar sein können, ohne dass sie dazu aus dem Unterteil 10 herausgeommen werden müssen. Die Klemmen sind hierzu in Drehschiebeführungen 13 aus ihrer Kontaktposition heraus, in eine Drehposition verschiebbar und in der Drehposition jeweils geführt drehbar. Nach dem Drehen in der Drehposition werden sie mit umgekehrter Drehstellung wieder in die Kontaktposition zuückgeschoben.

In Fig. 4 sind die drei Klemmen 11 in verschiedenen Verschiebe- bzw. Drehstellungen gezeigt, wobei sich die obere der drei Klemmen in der Kontaktposition in einer ersten Drehstellung und die mittlere Klemme in der Drehposition in einer Zwischen-Drehstellung befindet. Die untere Klemme befindet sich in einer zweiten, gegenüber der ersten um 180° gedrehten Drehstellung zurück auf dem Weg von der Drehposition in die Kontaktposition.

Bei beiden vorbeschriebenen Ausführungsbeispielen müssen an den Stromschienenverbindungen 6 bzw. 12 beim Wechsel der Abgangsrichtung keine Änderungen vorgenommen werden. Die Stromschienenverbindungen können insofern fest im Sinne von untereinander nicht austauschbar oder bezüglich ihrer Lage veränderbar eingebaut sein.

### BEZEICHNUNGSLISTE

- 1: Installationsgerät
- 2: Unterteil des Installationsgerätes 1
- 3: Schaltdeckel
- 4: Sammelschienen
- 5: Klemmen
- 6: Stromschienenverbindungen
- 7: Abgangskabel
- 8: Drehführungen
- 9: Drehachse
- 10: weiteres Unterteil
- 11: Klemmen
- 12: Stromschienenverbindungen
- 13: Drehschiebeführungen

## Patentansprüche

1. Elektrisches Installationsgerät (1) zur Montage auf einem Sammelschienensystem wahlweise mit Abgang in entgegengesetzten Abgangsrichtungen, welches Installationsgerät Stromschienenverbindungen (6) sowie mit den Stromschienenverbindungen in jeweils einer Kontaktposition zusammenwirkende, die Sammelschienen (4) hakenförmig umgreifende Klemmen (5) aufweist, wobei das Installationsgerät auf Umschlag teilweise symmetrisch ausgebildet ist und wobei die Klemmen (5) im Installationsgerät jeweils zwei einander entgegengesetzte Drehstellungen einnehmen können, **dadurch gekennzeichnet, dass** die Klemmen (5) im Installationsgerät selbst geführt drehbar sind.

2. Installationsgerät nach Anspruch 1, **dadurch gekennzeichnet, dass** die Klemmen (5) ein wenigstens teilweise zylindrisch ausgebildetes Klemmengehäuse (5.1) umfassen und dass in dem Installationsgerät zylindrische Führungen (8,8') für die Klemmengehäuse vorgesehen sind.

3. Installationsgerät nach Anspruch 1 oder 2, **dadurch gekennzeichnet, dass** die Klemmen (5) in ihrer Kontaktposition geführt drehbar sind, dass die Stromschienenverbindungen (6) im Bereich dieser Kontaktposition jeweils eine in Längsrichtung der Sammelschienen seitlich abstehende Kontaktzunge (6.1) aufweisen, dass die Klemmen (5) mit diesen Kontaktzungen (6.1) zusammenwirken und beim Drehen um diese Kontaktzungen (6.1) herum schwenken.

4. Installationsgerät nach Anspruch 1 oder 2, **dadurch gekennzeichnet, dass** die Klemmen (5) in ihm aus ihrer Kontaktposition heraus in eine Drehposition verschiebbar und in der Drehposition jeweils geführt drehbar sind.

5. Installationsgerät nach einem der Ansprüche 1 - 4, **dadurch gekennzeichnet, dass** die Stromschienenverbindungen (6) in ihm fest im Sinne von untereinander nicht austauschbar oder bezüglich ihrer Lage veränderbar eingebaut sind.

## Claims

1. Electrical installation device (1) for mounting on a busbar system selectively with an outgoer in opposite outgoer directions, which installation device has busbar connections (6) as well as clamps (5) which interact with the busbar connections in each case in one contact position and clasp the busbars (4) in the form of hooks, with the installation device being designed to be partially symmetrical upon turning, and with the clamps (5) each being able to assume two mutually opposite rotation positions in the installation device, **characterized in that** the clamps (5) are able to be rotated in a guided manner in the installation device itself.

2. Installation device according to Claim 1, **characterized in that** the clamps (5) clasp a clamp housing (5.1) which is at least partially cylindrical, and **in that** cylindrical guides (8, 8') for the clamp housings are provided in the installation device.

3. Installation device according to Claim 1 or 2, **characterized in that** the clamps (5) are able to be rotated in a guided manner in their contact position, **in that** the busbar connections (6) each have a contact tongue (6.1) which projects at the side in the longitudinal direction of the busbars, in the area of this contact position, **in that** the clamps (5) interact with these contact tongues (6.1) and pivot about these contact tongues (6.1) during rotation.

4. Installation device according to Claim 1 or 2, **characterized in that** the clamps (5) are able to be displaced therein from their contact position to a rotated position, and are each able to be rotated in a guided manner in the rotated position.

5. Installation device according to one of Claims 1-4, **characterized in that** the busbar connections (6) are installed fixed therein in the sense that they cannot be interchanged with one another or that their position is not variable.

## Revendications

1. Appareil électrique d'installation (1) destiné à être monté sélectivement sur un système de rails collecteurs avec un départ dans des directions de départ opposées, l'appareil d'installation présentant des liaisons (6) de rails de courant ainsi que des bornes (5) qui chevauchent en forme de crochet les rails collecteurs (4) et qui coopèrent avec les liaisons de rails de courant dans une position de contact, l'appareil d'installation étant partiellement symétrique afin de permettre une installation inverse et les bornes (5) pouvant prendre dans l'appareil d'installation deux positions de rotation mutuellement opposées,
**caractérisé en ce que**
les bornes (5) peuvent tourner de manière guidée dans l'appareil d'installation lui-même.

2. Appareil d'installation selon la revendication 1, **caractérisé en ce que** les bornes (5) comprennent un boîtier de borne (5.1) dont au moins une partie a une configuration cylindrique et **en ce que** des guides cylindriques (8, 8') pour les boîtiers de borne sont prévus dans l'appareil d'installation.

3. Appareil d'installation selon la revendication 1 ou 2, **caractérisé en ce que** les bornes (5) peuvent être tournées de manière guidée dans leur position de contact, **en ce que** les liaisons (6) des rails de courant présentent au niveau de cette position de contact une languette de contact (6.1) qui déborde latéralement dans le sens de la longueur des rails de courant et **en ce que** les bornes (5) coopèrent avec ces languettes de contact (6.1) et pivotent autour de ces languettes de contact (6.1) lors de la rotation.

4. Appareil d'installation selon la revendication 1 ou 2, **caractérisé en ce que** les bornes (5) peuvent coulisser dans une position de rotation hors de leur position de contact et peuvent être amenées à tourner de manière guidée dans la position de rotation.

5. Appareil d'installation selon l'une des revendications 1 à 4, **caractérisé en ce que** les liaisons (6) aux rails de courant sont montées de manière non mutuellement remplaçable et en position modifiable.
